# EUROPEAN PATENT APPLICATION

(11) **EP 4 821 581 A2**
(43) Date of publication of application: **14.10.2026**
(21) Application number: 26168556.4
(22) Date of filing: 27.03.2026
(51) Int. Cl.: B01D 47/10, F01D 25/18, F02C 7/32

(54) **FLUID SYSTEM AND METHOD OF SEPARATING OIL FROM AIR IN AIRCRAFT ENGINE**

(30) Priority: 08.04.2025 US 202519173409
(71) Applicant: Pratt & Whitney Canada Corp., Longueuil, Québec J4G 1A1 (CA)
(72) Inventor: ALECU, Daniel, (01BE5) Longueuil, J4G 1A1 (CA)
(74) Representative: Dehns

(57) **Abstract**

The air oil separator (130) can have a Venturi conduit (134) having, in sequential fluid flow communication along a fluid path, an inlet, a converging section (140), a throat section (142), a diverging section (144) and an air outlet, a motive flow nozzle (132) coaxial to the Venturi conduit (134) and directed to the inlet, a secondary flow passage between the motive flow nozzle (132) and the inlet, and an annular groove (160) defined around the fluid path, between the throat section (142) and the diverging section (144), the annular groove (160) fluidly connecting an oil outlet.

## Description

### TECHNICAL FIELD

The application relates generally to gas turbine engines and, more particularly, to air oil separators therefor.

### BACKGROUND OF THE ART

Various applications require separation of liquid from gas. Air oil separators, for instance, are used for separating lubricant from air in aircraft engines. While existing air oil separators are satisfactory to a certain degree, there always remains room for improvement.

### SUMMARY

In one aspect, there is provided a fluid system for an aircraft engine, the fluid system comprising : an air oil separator comprising: a Venturi conduit having, in sequential fluid flow communication along a fluid path, an inlet, a converging section, a throat section, a diverging section and an air outlet; a motive flow nozzle coaxial to the Venturi conduit and directed to the inlet; a secondary flow passage between the motive flow nozzle and the inlet; and an annular groove defined in a flow boundary surface of the Venturi conduit, around the fluid path, between the throat section and the diverging section, the annular groove fluidly connecting to an oil outlet.

In another aspect, there is provided a fluid system comprising : a reduction gearbox having gearing; a housing enclosing the gearing, air, and lubricant for the gearing, the air and the lubricant mixing into an air oil mixture during operation of the reduction gearbox; a Venturi conduit disposed within the housing, the Venturi conduit having, in sequential fluid flow communication along a fluid path, an inlet, a converging section, a throat section, a diverging section and an air outlet, and an annular groove defined around the fluid path and fluidly connecting an oil outlet; a motive flow nozzle coaxial to the Venturi conduit and directed to the inlet; a pump operable to supply pressurized oil to the motive flow nozzle; and a secondary flow passage between the motive flow nozzle and the inlet, the secondary flow passage fluidly communicating with the air oil mixture during operation.

In a further aspect, there is provided a method of separating a liquid from a gas, the method comprising : ejecting a motive flow of liquid from a nozzle into a converging section of a Venturi conduit, the motive flow entraining a secondary flow of the liquid and the gas into the Venturi conduit, the motive flow mixing with the secondary flow into a mixed flow within the Venturi conduit; the mixed flow exceeding a speed of sound in a throat section of the Venturi conduit, the throat section being downstream of the converging section; the mixed flow forming a shock front between the throat section and a diverging section of the Venturi conduit; and collecting the liquid at the shock front.

Features of embodiments are set forth in the dependent claims.

As used herein, the singular forms "a," "an," and "the" are intended to include the plural forms as well, unless the context clearly indicates otherwise.

### DESCRIPTION OF THE DRAWINGS

Reference is now made to the accompanying figures in which:
Fig. 1 is a schematic cross-sectional view of a gas turbine engine;
Fig. 2 is an ejector system in accordance with one embodiment;
Fig. 3 is an ejector system in accordance with another embodiment, acting as an air oil separator;
Figs. 4A and 4B are nomograms to design an ejector system geometric and functional parameters;
Fig. 5 is a plot showing an example of working conditions and the capability for compression in the normal shock;
Fig. 6 is a schematic diagram of a gearbox; and

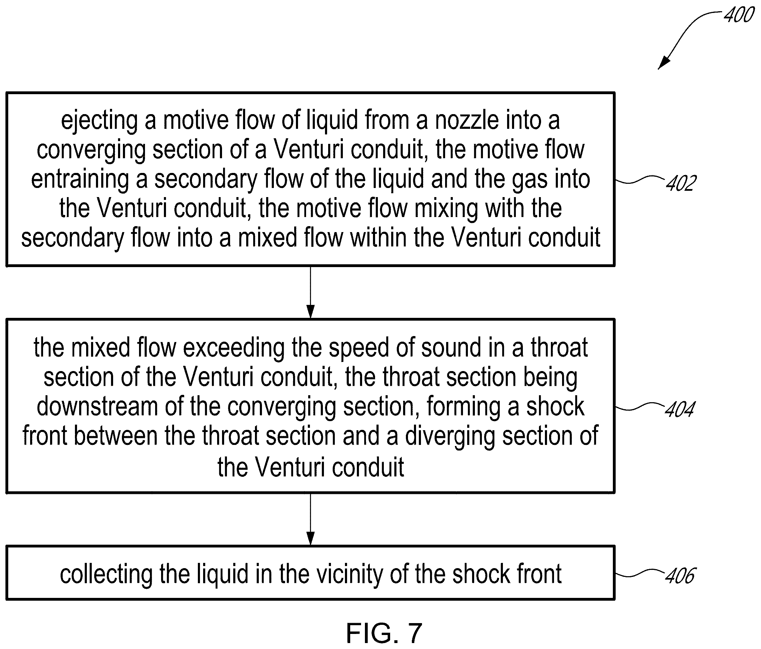

Fig. 7 is a flow chart of a method of separating liquid from gas in accordance with an embodiment.

### DETAILED DESCRIPTION

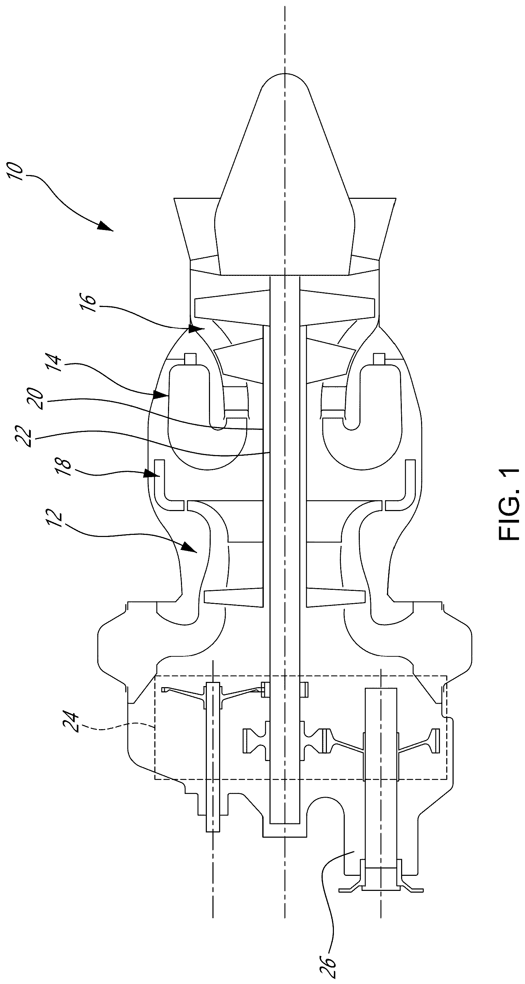

Fig. 1 illustrates an example of a turbine engine. In this example, the turbine engine 10 is a turboshaft engine generally comprising in serial flow communication, a multistage compressor 12 for pressurizing the air, a combustor 14 in which the compressed air is mixed with fuel and ignited for generating an annular stream of hot combustion gases around the engine axis 11, and a turbine section 16 for extracting energy from the combustion gases. The turbine engine terminates in an exhaust section.

The fluid path extending sequentially across the compressor 12, the combustor 14 and the turbine 16 can be referred to as the core gas path 18. In practice, the combustor 14 can include a plurality of identical, circumferentially interspaced, combustor units. In the embodiment shown in Fig. 1, the turboshaft engine 10 has two compressor and turbine stages, including a high pressure stage associated to a high pressure shaft 20, and a low pressure stage associated to a low pressure shaft 22. The low pressure shaft 22 is used as a power source during use.

Turboshaft engines, similarly to several other engine types, such as turboprop engines, electric aircraft engines and hybrid aircraft engines, typically have some form of gearing by which the power of a drive shaft, here the low pressure shaft 22, is transferred to an external shaft 26 bearing the blades or propeller. This gearing is typically housed within an enclosure referred to as a housing, and referred to collectively with the housing as a gearbox 24. The housing is typically used as a mechanical enclosure that protects and supports internal components including gearing, bearings and shafts, while also providing a fluid tight container for lubricant (oil). The gearing typically reduces the angular rotation speed of the drive shaft to reach an external rotation speed which is better adapted to rotate blades or a propeller.

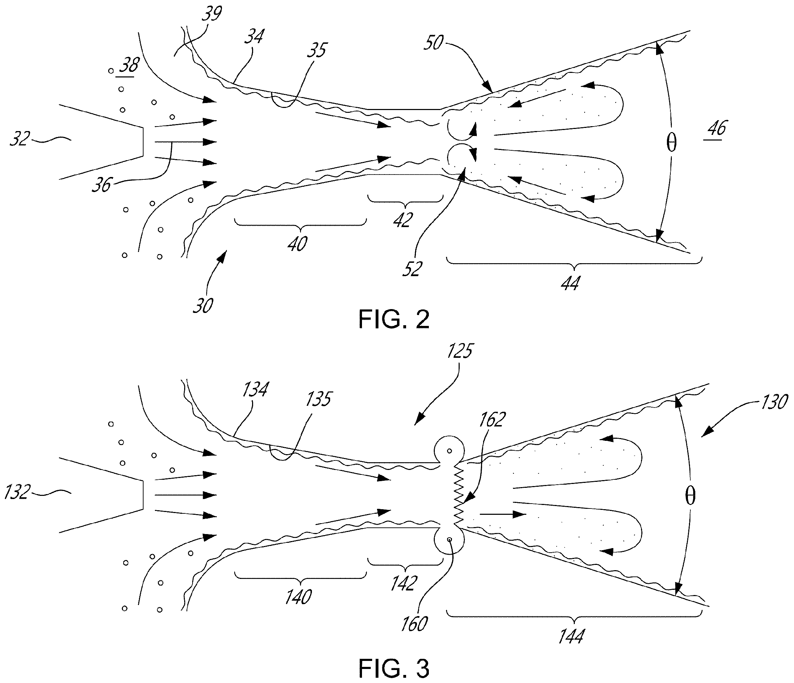

Fig. 2 shows an example of a fluid system having an ejector system 30 shown during operation with a two phase flow (i.e., mixture of liquid and gas). In this example, a motive flow nozzle 32 is supplied with pressurized liquid (e.g., oil) and directed to an inlet of a Venturi conduit 34. The motive flow jet 36 entrains a secondary flow 38 of a mixture of liquid and gas (e.g., oil and air) into the Venturi conduit 34, with which it mixes. The secondary flow 38 circulates in a secondary flow passage 39 which can extend around the motive flow nozzle 32 and lead into the Venturi conduit. The Venturi conduit 34 defines a flow boundary surface 35 having, in sequential fluid flow communication along a fluid path, an inlet, a converging section 40, a throat section 42, a diverging section 44 and an air outlet 46. The motive flow can mix dynamically with the secondary flow in the converging section 40 and throat section 42. The secondary flow accelerates and mixes with the motive flow, further accelerating in the throat section 42, and the mixed high energy flow then slows down in the diverging (diffuser) section 44 where it gains static pressure. The static pressure is lower in the throat section 42 than in the converging section 40 and than in the diverging section 44.

A liquid boundary layer 50 is formed on the internally-facing surface of the Venturi conduit 34. The liquid boundary layer 50 accumulation can be driven by the pressure gradient to the low pressure station located between the throat section 42 and the diverging section 44, namely along the converging section 40 and diverging section 44. The liquid boundary layer 50 can tend to accumulate at a low pressure station 52 and choke the flow, which can lead to a net pressure loss in the ejector system 30.

Fig. 3 presents another example of a fluid system 125 having an ejector system 130 shown during operation with a two phase flow. This example ejector system 130 can be used as an air oil separator, for instance. This ejector system 130 has similar components than the ejector system 130 presented in Fig. 2, namely motive flow nozzle 132 and Venturi conduit 134, but further has an annular groove 160 defined in the flow boundary surface 135, around the fluid path, at a location along the fluid path within the Venturi conduit 134. As in the embodiment of Fig. 2, the Venturi conduit 134 has a converging section 140, a throat section 142 and a diverging section 144.

In the example presented in Fig. 3, parameters of the ejector system 130 such as pressure and flow configuration at the motive flow nozzle 132, and pre-acceleration of the secondary liquid gas mixture, can be adapted for the velocity of the liquid and gas mixture to exceed the speed of sound in the liquid and gas mixture in the throat section 142 of the Venturi conduit. It will be noted that the speed of sound can be significantly lower in a liquid gas mixture than in a pure gas. Indeed, if for example the speed of sound would be 340 m/s in air, it can be roughly 10 times lower, e.g., 34 m/s, in an air oil mixture having 15% oil by volume (a concentration which can be common in blowdown scavenging, for instance. In such example circumstances, velocities above the speed of sound can be achieved in the Venturi conduit 134 with a feed pressure of 85 psi (586 kPa) at the motive flow nozzle 132. A feed pressure of 85 psi (586 kPa) can be considered moderate and relatively easy to achieve in many embodiments.

Indeed, speed of sound c in a two-phase flow of a liquid gas mixture can be approximated as $c = \sqrt{\left(\frac{{P}_{static}}{{ρ}_{liquid}}⋅\frac{1}{α \left(1-α\right)}\right)}$ (1)

Where P_{static} is the static pressure, *ρ_{liquid}* is the density of the liquid, *α* is the ratio of volume of gas on the total volume of the gas and liquid mixture.

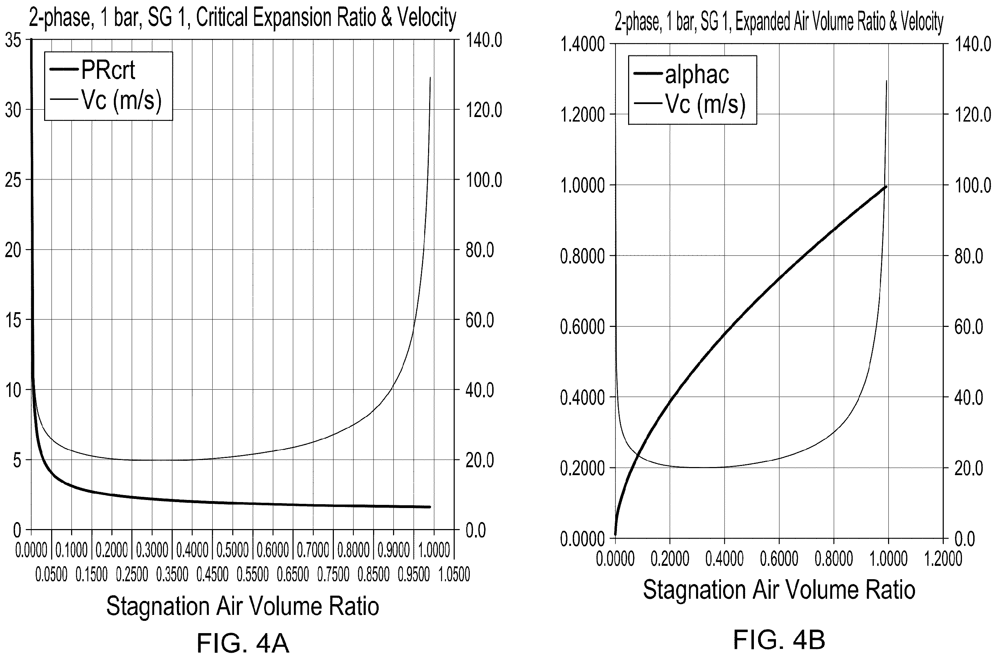

The plots presented in Figs. 4A and 4B, were built using equation 1 and can be used as nomograms to design the ejector geometric and functional parameters.

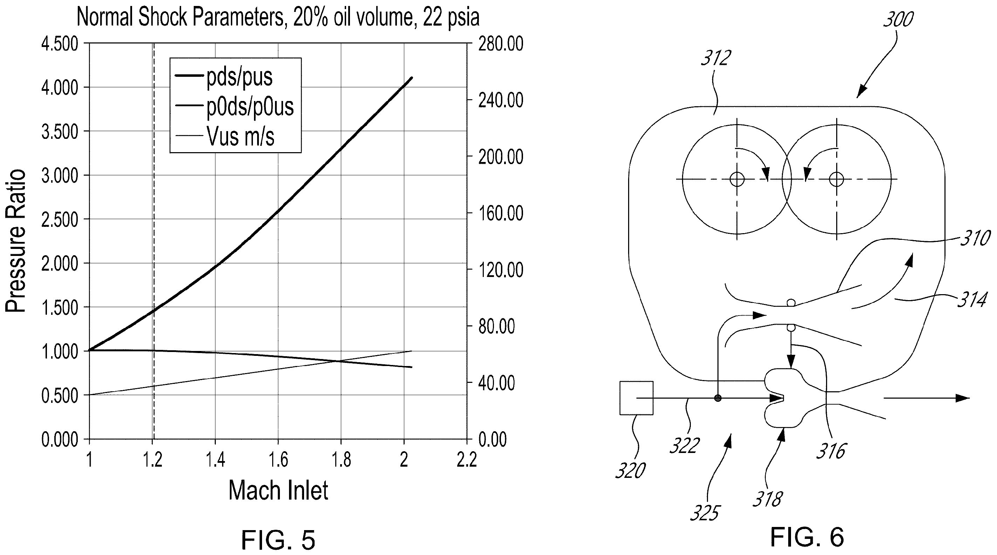

Accordingly, a shock front 162 can be established at the low pressure station, such as can be understood from the plot presented in Fig. 5, which shows an example of working conditions and the capability for compression in the normal shock. As an example associated to the plot of Fig. 5, an oil jet delivered at 85 psid (586 kPa) in a chamber operating at 22 psia (152 kPa) may generate a 1.5 pressure ratio in the ejector system 130 (~ 11psi (76 kPa) pressure rise).

A groove 160 can be formed in the internal surface of the Venturi conduit 134, around the fluid path. One or more grooves can fluidly connect a liquid outlet and serve as a liquid collector from which the liquid is scavenged. A groove 160 can also act as a stabilizer and contribute to locate the shock front at the low pressure station. The groove can be provided between the throat section and the diverging section, for instance.

The two phase inlet flow can be pre-accelerated such that it becomes supersonic (Mach > 1) as it mixes with the liquid motive flow. The mixed two-phase flow can be compressed through the normal shock, and the normal shock can be stabilized at the oil collector (volume bleed) station. The exit diffuser can be relatively shallow, in the sense that the total cone angle Θ can be below 5 degrees, namely below 4 degrees, and possibly between 2 and 3 degrees, more specifically. As opposed to being designed to recover kinetic energy into static pressure, it can be designed to control the liquid boundary layer and return it to the collector. A pump of any suitable type can be used to scavenge the oil from the outlet of the collector.

Fig. 6 presents an example embodiment of a fluid system 325 where an ejector system 130 such as shown in Fig. 3 is used as an air oil separator 310 of a gearbox 200, and where the air oil separator 310 is housed within the housing 312 of the gearbox 300. In one example configuration, the air oil separator 310 can be arranged in a closed loop, no net flow configuration, where the air outlet 314 is open to an air region of the housing 312, and the oil outlet 316 is returned to scavenge. **In** another example configuration, the air outlet 314 may be fluidly connected to a vent (not shown). Arrangements such as represented in Fig. 6 may work alone or in conjunction with perforated baffle. The arrangement can be particularly useful in the context of very fast gear boxes (80 to 180 m/s), which may suffer from two-phase compressibility effects. While perforated baffles alone may reduce sufficiently the oil content in the mist within the average speed gear box to maintain maximum Mach number below 0.6, at 180 m/s, the maximum oil content in the mist may need to be less than 0.8 % by volume to avoid supersonic regions (tip of the tooth). Typical perforated baffle may be insufficient to reduce the oil content below 0.8% by volume.

In this specific example, a secondary ejector 318 is used as a pump to scavenge the oil from the outlet 316 of the collector and to return it to scavenge. Both the secondary ejector 318 and the primary ejector system 310 can be fluidly connected to the same source of pressurized motive supply, e.g., an oil pump 320. The oil pump 320 can be a same oil pump which drives a feed flow of oil to the gearbox and/or to bearings of the aircraft engine, for example, and may be referred to as a main oil pump. An oil line 322 can connect the pump 320 and bifurcate to supply motive oil to both the motive flow nozzle and the secondary ejector system 318.

Accordingly, a method 400 of separating liquid from gas can be provided. The method 400 can include ejecting 402 a motive flow of liquid from a nozzle into a converging section of a Venturi conduit, the motive flow entraining a secondary flow of the liquid and the gas into the Venturi conduit, the motive flow mixing with the secondary flow into a mixed flow within the Venturi conduit. The method 400 can include the mixed flow exceeding 402 the speed of sound in a throat section of the Venturi conduit, the throat section being downstream of the converging section. The method 400 can include the mixed flow forming a shock front between the throat section and a diverging section of the Venturi conduit. The method 400 can further include collecting the liquid in the vicinity of the shock front.

The embodiments described in this document provide non-limiting examples of possible implementations of the present technology. Upon review of the present disclosure, a person of ordinary skill in the art will recognize that changes may be made to the embodiments described herein without departing from the scope of the present technology. Indeed, from the foregoing, it can be appreciated that at least some embodiments allows to achieving enhanced air oil separation efficiency in the contexts of high internal recirculation and/or low or zero net gas flow, with components having suitably low cost, maintenance requirements and weight, and suitable reliability. Yet further modifications could be implemented by a person of ordinary skill in the art in view of the present disclosure, which modifications would be within the scope of the present technology.

## Claims

1. A fluid system (125; 325) for an aircraft engine (10), the fluid system comprising: an air oil separator (130; 310) comprising:
a Venturi conduit (134) having, in sequential fluid flow communication along a fluid path, an inlet, a converging section (140), a throat section (142), a diverging section (144) and an air outlet (314);
a motive flow nozzle (132) coaxial to the Venturi conduit (134) and directed to the inlet;
a secondary flow passage between the motive flow nozzle (132) and the inlet; and
an annular groove (160) defined in a flow boundary surface (135) of the Venturi conduit (134), around the fluid path, between the throat section (142) and the diverging section (144), the annular groove (160) fluidly connecting to an oil outlet (316).

2. The fluid system of claim 1 wherein the motive flow nozzle (132) is connected to an oil pump (320), the oil pump (320) operable to deliver oil flow at a pressure which entrains secondary flow from the secondary flow passage to mix with the oil flow and reach a speed above the speed of sound in the Venturi conduit (134) during operation.

3. The fluid system of claim 1 or 2 further comprising a gearbox housing (312), the air oil separator (310) located within the gearbox housing (312), with the motive flow nozzle (132) fluidly connecting an oil supply line of the gearbox housing (312).

4. The fluid system of any preceding claim wherein the oil outlet (316) is fluidly connected to an oil pump (320).

5. The fluid system of claim 4 wherein the oil pump (320) is an ejector system (318), optionally wherein the system further comprises an oil line (322) bifurcating and supplying motive oil to the motive flow nozzle (132) and to the ejector system (318).

6. The fluid system of any preceding claim wherein the annular groove (160) is located at a low pressure station of the Venturi conduit (132).

7. A fluid system (125; 325) for an aircraft engine (10), comprising :
a reduction gearbox (300) including:
gearing;
a housing (312) enclosing the gearing and defining a cavity containing an air oil mixture;
a Venturi conduit (134) disposed within the housing (312) of the reduction gearbox (300), the Venturi conduit (134) having, in sequential fluid flow communication along a fluid path, an inlet, a converging section (140), a throat section (142), a diverging section (144) and an air outlet (314), the Venturi conduit (134) further having an annular groove (160) defined in a flow boundary surface (135) thereof around the fluid path, at a low pressure station, and fluidly connecting an oil outlet (316);
a motive flow nozzle (132) coaxial to the Venturi conduit (134) and directed to the inlet;
a pump (320) operable to supply pressurized oil to the motive flow nozzle (132); and
a secondary flow passage between the motive flow nozzle (132) and the inlet, the secondary flow passage fluidly communicating with the air oil mixture during operation.

8. The fluid system of claim 7 wherein the annular groove (160) is located between the throat section (142) and the diverging section (144); and/or wherein the annular groove (160) is operable to locate a shock front (162).

9. The fluid system of claim 7 or 8 wherein the pump (320) is operable to deliver oil flow at a pressure which entrains secondary flow from the secondary flow passage to mix with the oil flow and reach a speed above the speed of sound in the Venturi conduit (134) during operation.

10. The fluid system of any of claims 7 to 9 wherein the oil outlet (316) is fluidly connected to a second pump (318), optionally wherein the second pump (318) is an ejector system (318), further optionally wherein the system further comprising an oil line (322) connecting the pump (320) and bifurcating to supply motive oil to the motive flow nozzle (132) and to the ejector system (318).

11. The fluid system of any preceding claim wherein the diverging section (144) has a cone angle (Θ) of less than 4 degrees.

12. A method of separating a liquid from a gas, the method comprising :
ejecting a motive flow of liquid from a nozzle (132) into a converging section (140) of a Venturi conduit (134), the motive flow entraining a secondary flow of the liquid and the gas into the Venturi conduit (134), the motive flow mixing with the secondary flow into a mixed flow within the Venturi conduit (134);
the mixed flow exceeding a speed of sound in a throat section (142) of the Venturi conduit (134), the throat section (142) being downstream of the converging section (140);
the mixed flow forming a shock front (162) between the throat section (142) and a diverging section (144) of the Venturi conduit (134); and
collecting the liquid at the shock front (162).

13. The method of claim 12 further comprising, collecting the gas from an outlet (314) of the Venturi conduit (134), downstream of the diverging section (144), and recirculating the collected gas into the secondary flow.

14. The method of claim 12 or 13 wherein said forming a shock front (162) includes stabilizing the shock at an annular groove (160) and collecting the liquid from the annular groove (160).

15. The method of any of claims 12 to 14 further comprising the mixed flow diverging along the diverging section (144) of the Venturi conduit (134) at a cone angle (Θ) of less than 4 degrees.
